# EUROPEAN PATENT APPLICATION

(11) **EP 1 367 519 A1**
(43) Date of publication of application: **03.12.2003**
(21) Application number: 02711266.3
(22) Date of filing: 31.01.2002
(51) Int. Cl.: G06F 17/60

(54) **ELECTRONIC BID AGENT SYSTEM**

(30) Priority: 01.02.2001 JP 2001026062
(71) Applicant: NTT Communications Corp., Tokyo 100-8019 (JP)
(72) Inventor: MAEDA, Koichi, c/o NTT COMMUNICATIONS CORP., Tokyo 100-8019 (JP); KAKUTA, Susumu, c/o NTT COMMUNICATIONS CORP., Tokyo 100-8019 (JP); KASUGA, Ryoichi, c/o NTT COMMUNICATIONS CORP., Tokyo 100-8019 (JP); FUSHIMI, Osamu, c/o NTT COMMUNICATIONS CORP., Tokyo 100-8019 (JP)
(74) Representative: HOFFMANN - EITLE
(86) International application number: JP0200789
(87) International publication number: WO02061651

(57) **Abstract**

An electronic bidding proxy system capable of selecting an optimal maker or supplier quickly and efficiently even with respect to the bidding targets of a large amount of items is provided. The electronic catalog platform selects supplier candidate according to total points of each supplier calculated by applying a value of each bidding parameter described in a bidding catalog corresponding to a catalog for bidding produced from a bidding target information to a calculation formula of a template for supplier selection, produces their catalog for comparison, calculates total points of each supplier candidate according to a supplier candidate narrowing down information from a buyer's device and the template, selects a re-bidding supplier candidates, and selects an optimal supplier by regarding a re-bidding catalog corresponding to a catalog for re-bidding produced by integrating and processing their bidding catalogs and repeatedly carrying out the above described processing.

## Description

### TECHNICAL FIELD

The present invention relates to an electronic bidding proxy system for assisting to select an optimal maker according to spec catalog information of a plurality of makers, assisting to select an optimal supplier from a plurality of suppliers who are bidding for a bidding target from a buyer, and further producing a catalog for purchase system, and more particularly, to an electronic bidding proxy system for assisting to select an optimal supplier at an electronic catalog platform according to each bidding catalog information inputted through a network from each supplier's device by a plurality of suppliers who receive bidding target information inputted through a network from a buyer's device by a buyer at the electronic catalog platform and bid with respect to the bidding target information.

### BACKGROUND ART

Conventionally there exists a bidding system or service such as that of an auction or a reverse auction utilizing the Internet, but the bid is made in units of a single item or units of a small number of items, so that an enormous number of bids are necessary in order to make the bid collectively for a large amount of items such as a scale of several tens of thousand items made by a large company, for example. Also, the collecting of a large amount of items is conventionally made off-line on a paper basis.

In addition, in selecting an appropriate one from a plurality of makers or suppliers who are bidding for a bidding target product, it is selected by a simple price comparison or it is selected by an expert in a purchase division of the buyer by relying on experiences and hunch.

Also, the public announcement of a result after the selection of the maker or supplier is made off-line by FAX, mail, etc., for example, for each maker or supplier. In addition, the production of a catalog to be used for bidding targets after the bidding target products are determined is done on a paper basis, which requires huge time and cost.

As described above, the conventional bidding system makes the bidding in units of a single item or units of a small number of items in general, so that it is not suitable for a case of making the bid collectively for a large amount of items such as a scale of several tens of thousand items as it requires an enormous number of bids, and there is a problem that it is inefficient and ineconomical.

Also, the selection of the collective bidding target products of a large amount of items is conventionally made off-line on a paper basis, and there is a problem that it requires enormous time and cost.

In addition, in selecting an appropriate one from a plurality of makers or suppliers who are bidding for a bidding target product, it is selected by a simple price comparison or it is selected by an expert in a purchase division of the buyer by relying on experiences and hunch, so that there is a problem that the optimal maker or supplier cannot be selected precisely.

Also, conventionally there is a need to notify the public announcement of a result after the selection of the maker or supplier is made off-line by FAX, mail, etc., for example, for each maker or supplier, so that there is a problem that the task is tedious, and in addition, the production of a catalog to be used for bidding targets after the bidding target products are determined is done on a paper basis so that there is a problem that it requires huge amount of time and cost.

### DISCLOSURE OF THE INVENTION

Therefore, the present invention has an object to provide an electronic bidding proxy system capable of selecting an optimal maker or supplier quickly and efficiently even with respect to the bidding targets of a large amount of items, and producing a catalog for purchase system.

The present invention provides an electronic bidding proxy system for assisting to select an optimal supplier according to each bidding catalog information inputted through a network from each supplier's device by a plurality of suppliers who are bidding for a bidding target information inputted through a network from a buyer, the electronic bidding proxy system characterized by having a template for supplier selection in which a calculation formula for calculating a value of each bidding parameter for a bidding target, a plurality of ranges which divide values of each bidding parameter, points for evaluating a value in each range of each bidding parameter, and a threshold which sets a minimum line for a value of each bidding parameter, are set for each bidding target, a total points calculation means for calculating total points for each supplier by calculating a value of each bidding parameter of the template for supplier selection by applying a related value based on a value of each bidding parameter described in a bidding catalog provided from each supplier with respect to said bidding target to the calculation formula of said template for supplier selection, and summing points corresponding to a range to which this calculated value belongs for all bidding parameters, and a supplier selection means for selecting a supplier according to this calculated total points for each supplier and said threshold.

In the above described invention, the template for supplier selection in which the calculation formula, the range, the evaluation points, and the threshold for each bidding parameter are set for each bidding target is provided, the total points for each supplier are calculated by applying the related value based on the value of each bidding parameter from each supplier to the calculation formula of this template for supplier selection, and the optimal supplier is selected according to this total points and the threshold, so that it is possible to select the optimal supplier efficiently and quickly by carrying out the narrowing down of suppliers accurately by the template for supplier selection, rather than the supplier selection by the comparison of the prices only or relying on the experience and hunch as in the conventional case, and it is possible to quickly and efficiently carry out the collective bidding of a large amount of items such as a scale of several tens of thousand items, for example, rather than in units of a single item or in units of a small number of items as in the conventional case.

Also, the present invention provides an electronic bidding proxy system for assisting to select an optimal supplier according to each bidding catalog information inputted through a network from each supplier's device by a plurality of suppliers who are bidding for a bidding target information inputted through a network from a buyer, the electronic bidding proxy system characterized by having a template for supplier selection in which a calculation formula for calculating a value of each bidding parameter for a bidding target, a plurality of ranges which divide values of each bidding parameter, points for evaluating a value in each range of each bidding parameter, and a threshold which sets a minimum line for a value of each bidding parameter, are set for each bidding target, a distribution production means for producing a distribution for each supplier of values of each bidding parameter described in each bidding catalog information provided through a network from a respective supplier's device by each supplier with respect to said bidding target, a correction means for correcting the ranges, the points, and the threshold of said template for supplier selection according to factors including a deviation value and a spread of this produced distribution of values of each bidding parameter, a total points calculation means for calculating total points for each supplier by calculating a value of each bidding parameter of the template for supplier selection by applying a related value based on a value of each bidding parameter described in a bidding catalog provided from each supplier with respect to said bidding target to the calculation formula of said template for supplier selection, and summing points corresponding to a range to which this calculated value belongs for all bidding parameters, and a supplier selection means for selecting a supplier according to this calculated total points for each supplier and said threshold.

In the above described invention, the template for supplier selection in which the calculation formula, the ranges, the evaluation points, and the threshold for each bidding parameter are set for each bidding target is provided, this template for supplier selection is corrected according to the distribution of each bidding parameter for each supplier, the total points for each supplier are calculated by applying the related value based on the value of each bidding parameter from each supplier to the calculation formula of this template for supplier selection, and the optimal supplier is selected according to this total points and the threshold, so that it is possible to select the optimal supplier efficiently and quickly by carrying out the narrowing down of suppliers accurately by the template for supplier selection, rather than the supplier selection by the comparison of the prices only or relying on the experience and hunch as in the conventional case, and it is possible to quickly and efficiently carry out the collective bidding of a large amount of items such as a scale of several tens of thousand items, for example, rather than in units of a single item or in units of a small number of items as in the conventional case.

Also, the present invention provides an electronic bidding proxy system for assisting to select an optimal supplier at an electronic catalog platform according to each bidding catalog information inputted through a network from each supplier's device by a plurality of suppliers who are bidding for a bidding target information, by receiving the bidding target information inputted through a network from a buyer's device by a buyer at the electronic catalog platform, the electronic bidding proxy system characterized in that said electronic catalog platform has a template for supplier selection in which a calculation formula for calculating a value of each bidding parameter for a bidding target, a plurality of ranges which divide values of each bidding parameter, points for evaluating a value in each range of each bidding parameter, and a threshold which sets a minimum line for a value of each bidding parameter, are set for each bidding target or for each bidding target group, a bidding information reception means for receiving the bidding target information inputted through a network from the buyer's device by the buyer, a catalog for bidding production means for producing a catalog for bidding according to this received bidding target information, a catalog for bidding transmission means for transmitting said catalog for bidding through a network to each supplier's device, by communications of the present system and each supplier's device, a bidding catalog reception means for receiving a bidding catalog corresponding to said catalog for bidding from each supplier's device through a network, a catalog for comparison production means for calculating total points for each supplier by calculating a value of each bidding parameter of the template for supplier selection by applying a related value based on a value of each bidding parameter described in this received bidding catalog to the calculation formula of said template for supplier selection, and summing points corresponding to a range to which this calculated value belongs for all bidding parameters, selecting supplier candidates according to this calculated total points for each supplier and said threshold, and producing a catalog for comparison by integrating and processing the bidding catalogs of this selected supplier candidates, and a catalog for comparison transmission means for transmitting said catalog for comparison through a network to the buyer's device, by communications of the present system and said buyer's device.

In the above described invention, the electronic catalog platform produces the catalog for bidding according to the bidding target information received from the buyer's device and transmits it to each supplier's device, calculates the total points for each supplier by applying the related value based on the value of each bidding parameter described in the bidding catalog to the calculation formula of the template for supplier selection, selects the supplier candidates according to this total points and the threshold, produces the catalog for comparison by integrating and processing the bidding catalogs of these supplier candidates and transmits it to the buyer's device, so that it is possible to carry out the narrowing down of the suppliers by the template for supplier selection accurately, rather than the supplier selection by the comparison of the prices only or relying on the experience and hunch as in the conventional case.

Also, the present invention provides an electronic bidding proxy system characterized in that the buyer's device has a re-bidding request means for requesting a re-bidding by receiving said catalog for comparison, and transmitting a narrowing down information for narrowing down said supplier candidates further according to a content of each bidding parameter described in this catalog for comparison, to the electronic catalog platform, and said electronic catalog platform further has a catalog for re-bidding production means for receiving said narrowing down information from the buyer's device, calculating total points for each one of said supplier candidates according to this narrowing down information and said template for supplier selection, selecting re-bidding supplier candidates according to this total points of each supplier candidate, and producing a catalog for re-bidding by integrating and processing the bidding catalogs of this selected re-bidding supplier candidates, a catalog for re-bidding transmission means for transmitting said catalog for re-bidding through a network to a supplier's device of each re-bidding supplier candidate, by communications of the present system and supplier's devices of said re-bidding supplier candidates, a re-bidding catalog reception means for receiving a re-bidding catalog corresponding to said catalog for re-bidding from a supplier's device of each re-bidding supplier candidate through a network, an optimal supplier selection means for selecting an optimal supplier for the bidding target of the buyer, by regarding this received re-bidding catalog as said bidding catalog and applying it to processing to be executed by said catalog for comparison production means, the catalog for comparison transmission means, the re-bidding request means, the catalog for re-bidding production means, the catalog for re-bidding transmission means, and the re-bidding catalog reception means, and repeatedly carrying out that processing, a successful bit catalog production means for producing a successful bit catalog according to the bidding catalog of this selected optimal supplier, and a catalog for purchase system production means for producing a catalog for purchase system according to a bidding target catalog information, a spec information and an image information.

In the above described invention, the optimal supplier is selected by calculating the total points of each each supplier candidate according to the supplier candidate narrowing down information from the buyer's device and the template for supplier selection, selecting the re-bidding supplier candidates according to this total points, producing the catalog for re-bidding by integrating and processing the bidding catalogs of these re-bidding supplier candidates and transmitting it to the supplier device of each re-bidding supplier candidate, receiving the re-bidding catalog from the supplier's device of each re-bidding supplier candidate, regarding this re-bidding catalog as said bidding catalog and carrying out the above described processing repeatedly, and also the catalog for purchase system is produced, so that it is possible to select the optimal supplier efficiently and quickly by carrying out the narrowing down of the suppliers accurately by the template for supplier selection, rather than the supplier selection by the comparison of the prices only or relying on the experience and hunch as in the conventional case, and it is possible to quickly and efficiently carry out the collective bidding of a large amount of items such as a scale of several tens of thousand items, for example, rather than in units of a single item or in units of a small number of items as in the conventional case. Also, the processings including the catalog production, the collecting of the bidding result, the public announcement of the selection result, etc., are all linked, and carried out automatically on-line through the network, rather than on the paper basis as in the conventional case, so that it is possible to improve each task considerably compared with the conventional case, and it is possible to reduce the huge amount of time and cost.

Also, the present invention provides an electronic bidding proxy system for assisting to select an optimal maker according to spec catalog information of a plurality of makers, and assisting.to select an optimal supplier according to each bidding catalog information inputted through a network from each supplier's device by a plurality of suppliers who are bidding for a bidding target information inputted through a network from a buyer, the electronic bidding proxy system characterized by having a catalog for spec comparison production means for producing a catalog for spec comparison according to the bidding target information received from the buyer, and transmitting said catalog for spec comparison through a network to each maker's device, by communications of the present system and each maker's device, an integrated and processed catalog for comparison production means for receiving a data inputted catalog for spec comparison in which data are inputted by each maker with respect to said catalog for spec comparison from each maker through a network, integrating and processing this received data inputted catalog for spec comparison of each maker, and supplying an integrated and processed catalog for comparison to the buyer, a selection result catalog production means for receiving a result of selecting makers by narrowing down makers according to information described in that catalog for comparison at the buyer according to this integrated and processed catalog for comparison, producing a selection result catalog, and making that selection result catalog readable to each maker, a catalog for bidding transmission means for a catalog for bidding produced according to said bidding target information to each supplier device which is supplying the bidding target of said selected makers, through a network, by communications of the present system and each supplier's device, a catalog for comparison production means for selecting supplier candidates according to each bidding parameter described in the bidding catalog received from each supplier's device with respect to said catalog for bidding, and producing a catalog for comparison by integrating and processing the bidding catalogs of this selected supplier candidates, a catalog for re-bidding production means for transmitting said catalog for comparison through a network to the buyer's device, by communications of the present system and said buyer's device, receiving a re-bidding request transmitted from the buyer's device along with a narrowing down information for narrowing down said supplier candidates further according to a content of each bidding parameter described in this catalog for comparison, selecting re-bidding supplier candidates from said supplier candidates according to this narrowing down information, and producing a catalog for re-bidding by integrating and processing the bidding catalogs of this selected re-bidding supplier candidates, a re-bidding catalog reception means for transmitting said catalog for re-bidding through a network to a supplier's device of each re-bidding supplier candidate, by communications of the present system and supplier's devices of said re-bidding supplier candidates, and receiving a re-bidding catalog corresponding to this catalog for re-bidding from a supplier's device of each re-bidding supplier candidate through a network, an optimal supplier selection means for selecting an optimal supplier for the bidding target of the buyer, by regarding this received re-bidding catalog as said bidding catalog and applying it to processing to be executed by said catalog for comparison production means, the catalog for re-bidding production means, and the re-bidding catalog reception means, and repeatedly carrying out that processing, a successful bit catalog production means for producing a successful bit catalog according to the bidding catalog of this selected optimal supplier, and a catalog for purchase system production means for producing a catalog for purchase system according to a bidding target catalog information, a spec information and an image information.

In the above described invention, the optimal supplier is selected by transmitting the catalog for spec comparison produced from the bidding target information from the buyer to each maker's device, receiving the data inputted catalog for spec comparison from each maker, making the selection result catalog produced by receiving the result of selecting the makers at the buyer according to the catalog for comparison produced by integrating and processing this catalog for spec comparison readable to each maker, transmitting the catalog for bidding according to the bidding target information to each supplier's device which is supplying the bidding target of said selected makers, selecting the supplier candidates according to each bidding parameter of the bidding catalog from each supplier's device, producing the catalog for comparison by integrating and processing the bidding catalogs of these supplier candidates, transmitting it to the buyer's device, selecting the re-bidding supplier candidates according to the narrowing down information from the buyer's device in order to narrow down the supplier candidates further according to each bidding parameter of this catalog for comparison, producing the catalog for re-bidding, receiving the re-bidding catalog corresponding to this catalog for re-bidding, regarding this re-bidding catalog as said bidding catalog and carrying out the above described processing repeatedly, and also the catalog for purchase system is produced, so that it is possible to select the optimal supplier efficiently and quickly by carrying out the narrowing down of the suppliers accurately by the template for supplier selection, rather than the supplier selection by the comparison of the prices only or relying on the experience and hunch as in the conventional case, and it is possible to quickly and efficiently carry out the collective bidding of a large amount of items such as a scale of several tens of thousand items, for example, rather than in units of a single item or in units of a small number of items as in the conventional case. Also, the processings including the catalog production, the collecting of the bidding result, the public announcement of the selection result, etc., are all linked, and carried out automatically on-line through the network, rather than on the paper basis as in the conventional case, so that it is possible to improve each task considerably compared with the conventional case, and it is possible to reduce the huge amount of time and cost.

Also, the present invention is characterized in that the related value based on a value of each bidding parameter to be applied to the calculation formula of said template for supplier selection contains at least a value of each bidding parameter described in a current bidding catalog from each supplier with respect to said bidding target, and if necessary one or more of values of each bidding parameter described in a previous bidding catalog and a current re-bidding catalog, a past record data, a log data for supplier selection by the buyer, a successful bit catalog data, a sales record data of the buyer, and a sales record data of a supplier, according to need.

In the above described embodiment, the total points of each supplier are calculated by applying any one of a current bidding catalog, a previous bidding catalog, a past record data, a log data for supplier selection, a successful bit catalog data, a sales record data, to a calculation formula of the template for supplier selection.

Also, the present invention is characterized in that said bidding parameters include at least one or more of a price of the bidding target, a discount rate, and a delivery time.

In the above described invention, the bidding parameters include at least one or more of a price of the bidding target, a discount rate, and a delivery time.

### BRIEF DESCRIPTION OF THE DRAWINGS

Fig. 1 is a figure showing a configuration of an electronic bidding proxy system according to one embodiment of the present invention.
Fig. 2 is a figure for explaining a processing regarding a catalog for bidding production and delivery to a supplier selection, a public announcement of a result, and a catalog for purchase system production, in the electronic bidding proxy system shown in Fig. 1.
Fig. 3 is a figure showing an exemplary of a template for supplier selection to be used in the supplier selection shown in Fig. 2.
Figs. 4A, 4B and 4C are graphs showing distributions for each supplier of each bidding parameter to be used for an optimization of the template for supplier selection shown in Fig. 3.
Fig. 5 is a flow chart showing a processing regarding the catalog for bidding production and delivery to the supplier selection, the public announcement of a result, and the catalog for purchase system production shown in Fig. 2.
Fig. 6 is a figure for explaining a processing regarding a catalog for spec comparison production, a maker selection assistance, and a public announcement of a selection result, in the electronic bidding proxy system shown in Fig. 1.

### BEST MODE FOR CARRYING OUT THE INVENTION

In the following, the embodiment of the present invention will be described by using drawings.

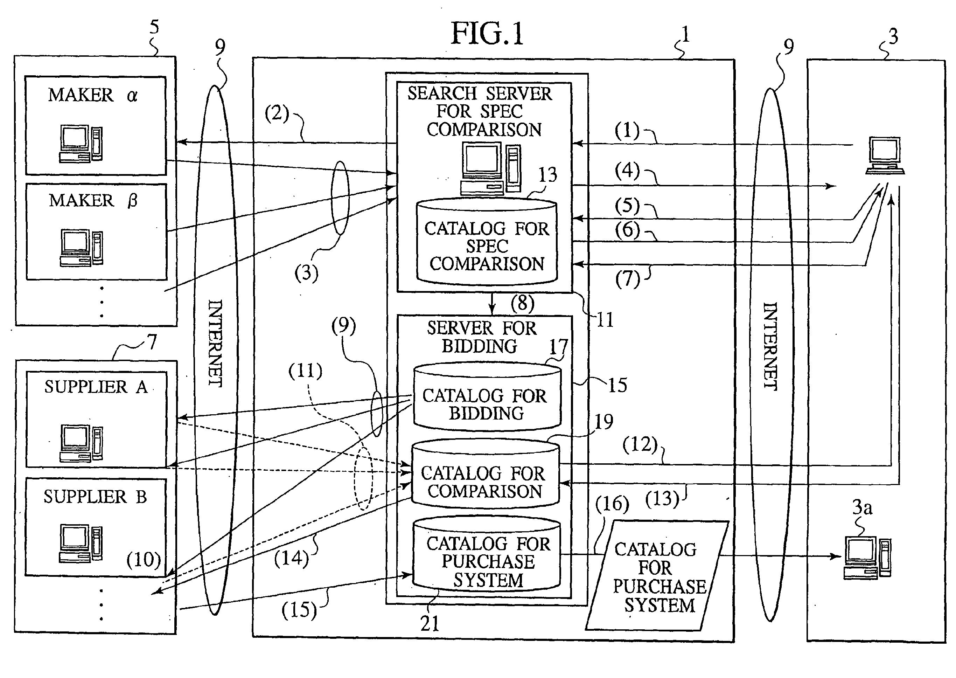

Fig. 1 is a figure showing a configuration of an electronic bidding proxy system according to one embodiment of the present invention. The electronic bidding proxy system of the present embodiment shown in the same figure has an electronic catalog platform 1, and to this electronic catalog platform 1, a buyer's device 3 of a buyer, a maker's device 5 of makers, and a supplier's device 7 of suppliers are connected through an Internet 9.

The electronic catalog platform 1 comprises a search server for spec comparison 11 having a spec comparison database 13 for storing a catalog for spec comparison, and a server for bidding 15 having a catalog for bidding database 17, a catalog for comparison database 19 and a catalog for purchase system database 21.

Note that, in the following description, the exchanges of each information including various types of catalogs among the electronic catalog platform 1, the buyer's device 3, the maker's device 5 and the supplier's device 7 will be described by using terms of downloading or uploading, but it should be noted that a reception is carried out in correspondence to the downloading and the transmission is carried out in correspondence to the uploading on each drawing. Also, the electronic catalog platform 1, the buyer's device 3, the maker's device 5 and the supplier's device 7 are individually independent devices, so that it is possible to operate and distribute respectively corresponding programs independently.

The overall flow of the electronic bidding proxy system of the present embodiment configured as such will be described briefly. First, in response to an item registration (1) regarding which products entered from the buyer's device 3 through the Internet 9 are to be set as the bidding target, the electronic catalog platform 1 makes a request for providing spec information (2) to each maker of the maker's device 5 through the Internet 9, and collects the spec information from each maker's device 5 (3). When the collecting of the spec information is completed, the electronic catalog platform 1 transmits a spec information collecting completion notice to the buyer's device 3 through the Internet 9 (4).

In response to the reception of the spec information collecting completion notice from the electronic catalog platform 1, the buyer's device 3 searches through the spec information collected from each maker's device 5 by the electronic catalog platform 1 (5), and according to this search result (6), selects target bidding items (7).

The electronic catalog platform 1 proceeds to the bidding with respect to each supplier's device 7 according to the bidding target items selected by the buyer's device 3 (8), and first distributes a catalog for bidding to each supplier's device 7 through the Internet 9 (9). Upon receiving the catalog for bidding from the electronic catalog platform 1, each supplier's device 7 enters data such as a new price into this catalog for bidding (10), and aggregates (accumulates) this catalog bidding into which the data are entered to the electronic catalog platform 1 (11).

The electronic catalog platform 1 generates a catalog for comparison from the catalog for bidding aggregated from each supplier's device 7 and stores it into the catalog for comparison database 19, and requests a supplier narrowing down search to the buyer's device 3 (12). In response to this search request, the buyer's device 3 notifies a narrowing down information such as information on narrowed down suppliers and new price information, to the electronic catalog platform 1 (13). The electronic catalog platform 1 makes a request for providing spec information to each supplier's device 7 according to this narrowing down information from the buyer's device 3 (14), receives the spec information sent from the supplier's device 7 in response (15), produces a catalog for purchase system, and transmits this catalog for purchase system to a purchase system 3a of the buyer's device 3 (16).

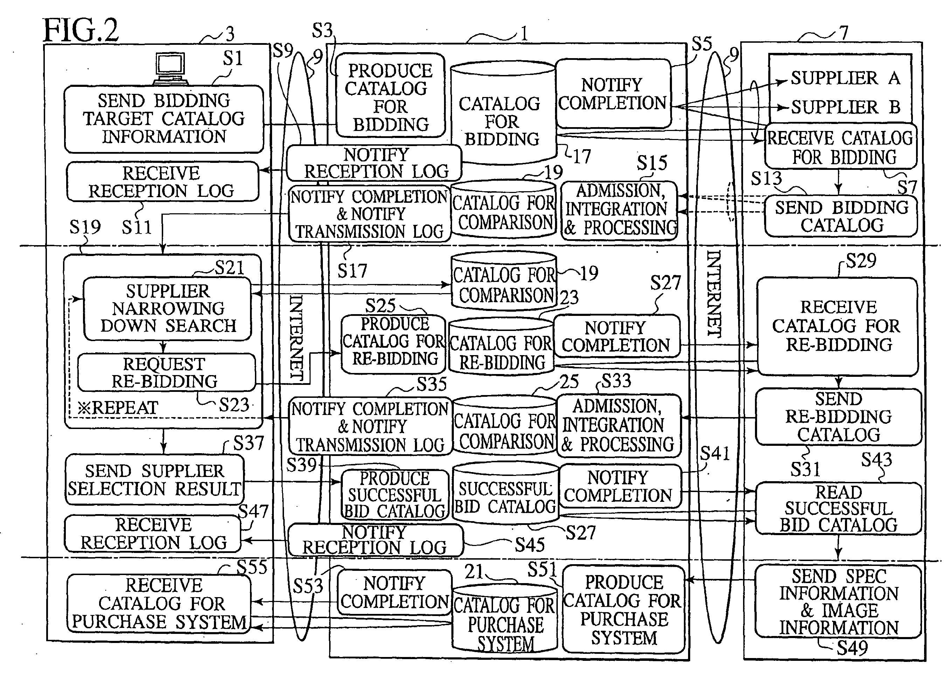

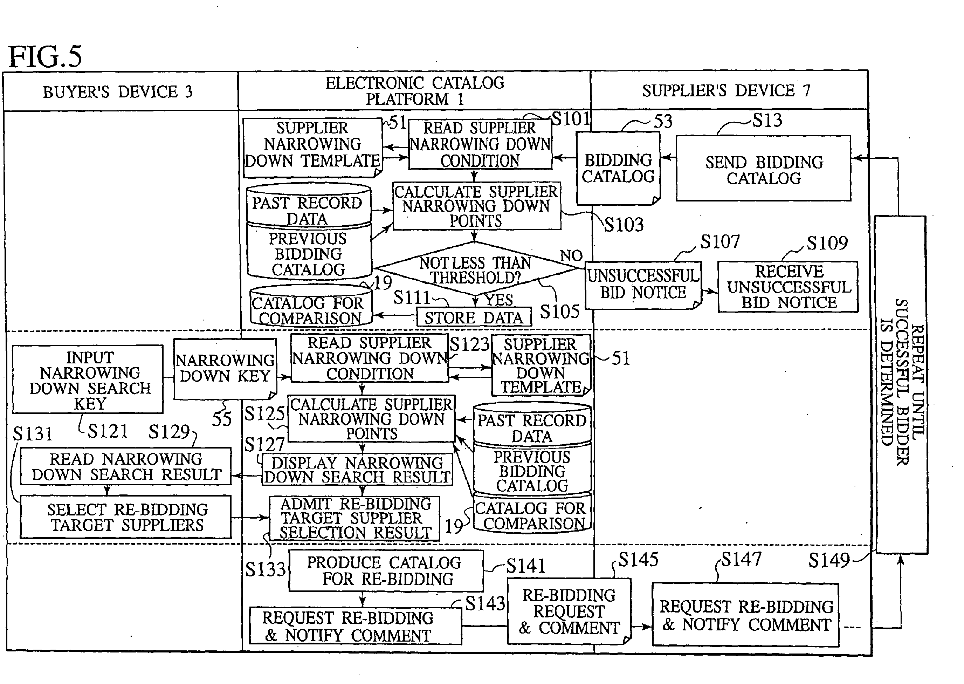

Next, with references to Fig. 2 and Fig. 5, a processing from a catalog for bidding production and delivery to a supplier selection assistance, a public announcement of a selection result, and a catalog for purchase system production in the electronic bidding proxy system of the present embodiment will be described. Note that, as shown in Fig. 2, the electronic catalog platform 1 further has a catalog for re-bidding database 23, a catalog for comparison database 25, and a successful bid catalog database 27, in addition to the catalog for spec comparison database 13, the catalog for bidding database 17, the catalog for comparison database 19 and the catalog for purchase system database 21 shown in Fig. 1.

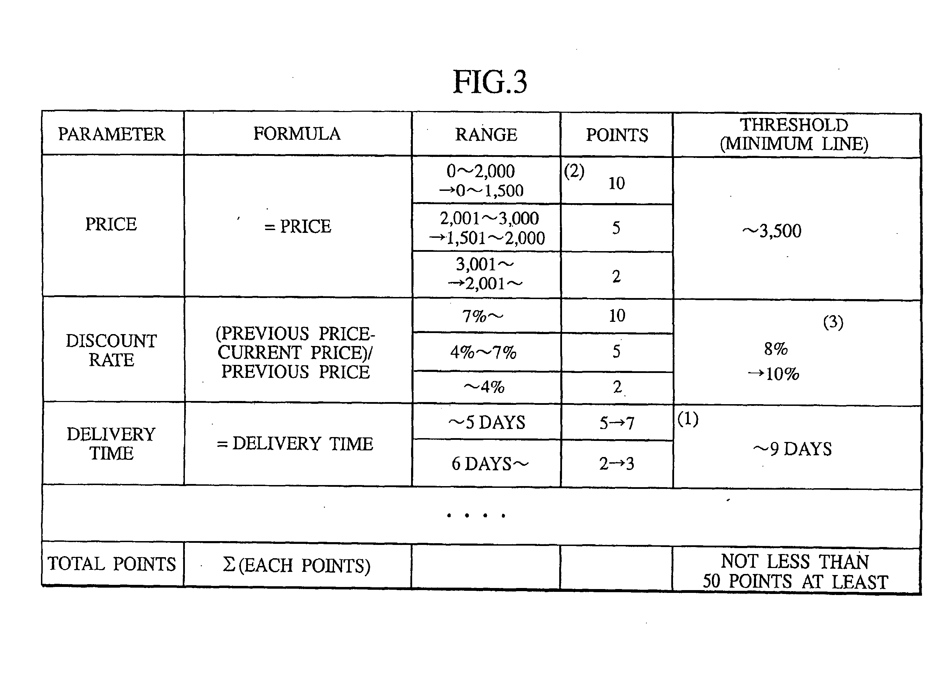

In this processing, in the case where the electronic catalog platform 1 receives the bidding catalog or the re-bidding catalog from the supplier's device 7, the total of the points which are evaluation scores for each supplier is calculated according to a value of each bidding parameter such as a price, a discount rate, a delivery time, etc., for example, that is described in this bidding catalog or re-bidding catalog, and a template for supplier selection for narrowing down and selecting suppliers according to that total points is used, and this template for supplier selection will be described first with reference to Fig. 3.

The template for supplier selection is set for each bidding target or for each bidding target group, and as shown in Fig. 3, in correspondence to each bidding parameter such as a price, a discount rate, a delivery time, etc., of the bidding target, a calculation formula for calculating a value of the bidding parameter, a plurality of ranges that divide values of each bidding parameter, points for evaluating a value in each range of each bidding parameter, and a threshold for setting a minimum line of the value of each bidding parameter are set up.

In Fig. 3, for the price for example, the range is divided into three ranges of "0-2,000", "2,001-3,000", and "3,001-", 10 is set as the points for "0-2,000", 5 is set as the points for "2,001-3,000", and points 2 is set as the points for "3,001-". Also, the threshold for the minimum line is set to be up to 3,500. Namely, if the price of a certain product which is a certain bidding target is 2,500, the points of this product are five, and the threshold of 3,500 is cleared.

Also, for the bidding parameter of the discount rate, a formula in which a difference obtained by subtracting the current price from the previous price is divided by the previous price is set as the calculation formula, the range is divided into "7%-", "4%-7%", and "-4%", while it is divided into "-5 days" and "6 days-" for the delivery time, and the points are set for each one of these divided ranges.

Consequently, when each bidding parameter such as the price, the discount rate, the delivery time, etc. of a certain product which is the bidding target is ascertained from the data described in the bidding catalog or the re-bidding catalog, these values of each bidding parameter are applied to the template for supplier selection shown in Fig. 3, and the total points of that product can be calculated by combining the points of each bidding parameter. By calculating that total points for each supplier and comparing them, it is possible to narrow down the plurality of suppliers, and it becomes possible to select the supplier with the highest points as an optimal supplier. Note that, as shown in Fig. 3, when the total points are less than a threshold of not less than 50 points at least, the supplier which is bidding this product will be removed from the bidding.

Note that, to be accurate, the values to be applied to the calculation formula of the template for supplier selection in order to calculate the total points for each supplier with respect to the bidding target from the template for supplier selection shown in Fig. 3 contain not only the value of each bidding parameter of the bidding target described in the bidding catalog or the re-bidding catalog as described above, but also at least a related value based on the value of each bidding parameter described in the bidding catalog or the re-bidding catalog that is provided from each supplier with respect to the bidding target, more specifically the value of each bidding parameter described in the current bidding catalog from each supplier with respect to the bidding target, and if necessary one or more of information such as the value of each bidding parameter described in the previous bidding catalog and the current re-bidding catalog, the past record data, the past log information, the log data for the supplier selection by the buyer, the successful bid catalog data, the sales record data of the buyer, the sales record data of the supplier, etc., according to the need.

For example, in the case where the bidding parameters of the template for supplier selection include a bidding price lowering range and a discount rate relative to the last year for each product, the bidding price lowering range is calculated by subtracting the current bidding price described in the current bidding catalog or the catalog for comparison produced from the current bidding catalog, from the previous bidding price described in the previous bidding catalog or the catalog for comparison produced from the previous bidding catalog, and the discount rate relative to the last year for each product is calculated as a difference obtained by subtracting an amount obtained by multiplying the previous shipment number stored as the record data with the current bidding price described in the current bidding catalog or the catalog for comparison produced from the current bidding catalog, from the previous shipment total amount stored as the record data, divided by the previous shipment total amount stored as the record data.

Namely, the electronic catalog platform 1 of the present embodiment has a total point calculation function for calculates the value of each bidding parameter of the template for supplier selection by applying the related value based on value of each bidding parameter described in the bidding catalog provided from each supplier with respect to the bidding target, to the calculation formula of said template for supplier selection, and calculating the total points for each supplier by summing the points corresponding to the range to which this calculated value belongs for all the bidding parameters. According to this total points for each supplier and the threshold, it is possible to select the optimal supplier.

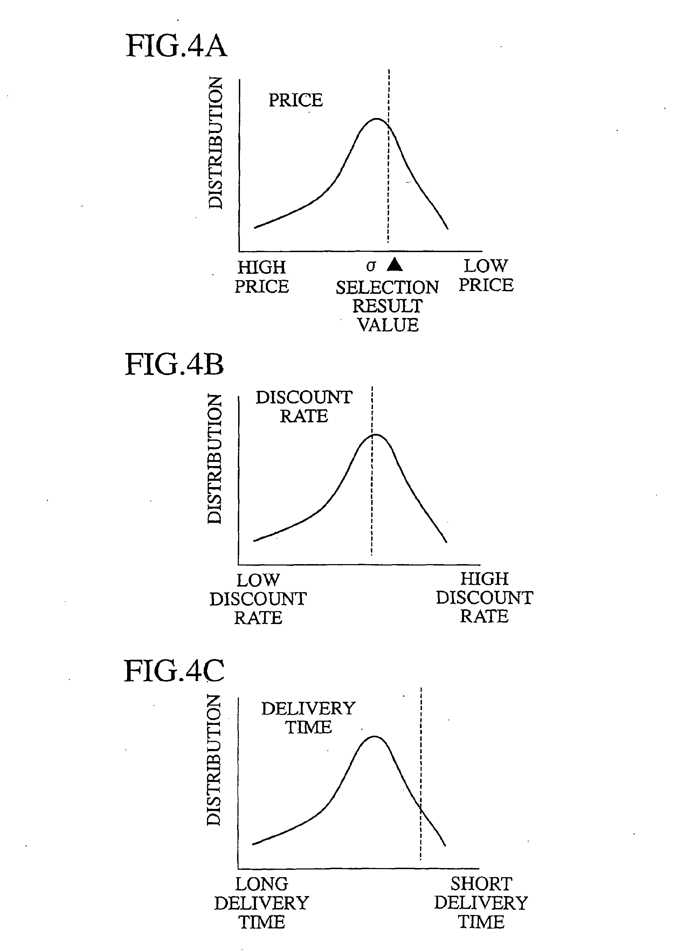

Also, in the present embodiment, it is made to select the optimal supplier by correcting the ranges, the points, and the thresholds of the template for supplier selection shown in Fig. 3 according to factors including the deviation value and the spread of the distribution of the values of each bidding parameter described in the bidding catalog or the re-bidding catalog from each supplier. For this reason, it is made such that the distribution for each supplier of the values of each bidding parameter described in the bidding catalog or the re-bidding catalog provided by each supplier with respect to the bidding target is produced as shown in Figs. 4A, 4B and 4C, and the ranges, the points, and the thresholds of the template for supplier selection are corrected from these distributions.

The distributions shown in Figs. 4A, 4B and 4C show distributions of the price, the discount rate, and the delivery time for each supplier which are the bidding parameters described in each bidding catalog or the re-bidding catalog from each supplier. Then, from such distributions, several factors including the deviation value and the spread of that distribution such as whether that distribution is widening or narrowing, or what is the deviation value can be seen, and it is made such that the ranges, the points and the thresholds of the template for supplier selection of Fig. 3 are corrected according to such factors including the deviation value and the spread.

For example, in the case where it becomes clear from the distribution of the price among the distributions shown in Figs. 4A, 4B and 4C, for example, that the range division of "0-1,500", "1,501-2,000", and "2001-" is more appropriate than the range division of "0-2,000", "2,001-3.000", and "3000-" described above as the range division of the price, the ranges will be corrected as shown in the template for supplier selection of Fig 3.

Note that, in the distributions shown in Figs. 4A, 4B and 4C, the vertical lines indicated by dotted lines are indicating the values as a result of the selection. More specifically, they are indicating the value of each bidding parameter such as the price, the discount rate, the delivery time, etc., described in the bidding catalog or the re-bidding catalog of the selected supplier, and from the distribution of the delivery time shown in Fig. 4(c), for example, it indicates that one with a considerably short delivery time has been selected as far as the delivery time is concerned.

Namely, the electronic catalog platform 1 of the present embodiment has a distribution production function for producing the distribution for each supplier of the values of each bidding parameter described in each bidding catalog information provided by each supplier with respect to the bidding target, a correction function for correcting the ranges, the points, and the thresholds of the template for supplier selection according to the factors including the deviation value and the spread of this produced distribution of the values of each bidding parameter, a total points calculation function for calculating the value of each bidding parameter of the template for supplier selection by applying the related values based on the value of each bidding parameter described in the bidding catalog provided from each supplier with respect to the bidding target to the calculation formula of the template for supplier selection, and calculating the total points for each supplier by summing the points corresponding to the range to which this calculated value belongs for all the bidding parameters, and a supplier selection function for selecting the supplier according to this calculated total points for each supplier and the threshold.

The processing for selecting the supplier by using the template for supplier selection described above, more specifically the processing from the catalog for bidding production and delivery to the supplier selection assistance, the public announcement of the selection result, and the catalog for purchase system production will be described with references to Fig. 2 and Fig. 5. Note that, in Fig. 2 and Fig. 5, the same step number is attached to the same processing.

Here, in Fig. 2, the steps S1 to S17 constitute a catalog for supplier selection production service including the production and delivery of the bidding catalog and the admission, integration and processing of the bidding catalog, the steps S19 to S47 constitute a supplier selection assistance and public announcement of selection result service, and the steps S49 to S55 constitute a catalog for purchase system production service.

Also, in Fig. 5, the steps S13 to S111 constitutes an processing for automatically narrowing down suppliers at a time of admitting the bidding catalog, the steps S121 to S133 constitute a processing for manually narrowing down suppliers by the buyer, and the steps S141 to S147 constitute a processing for presenting re-bidding request notice and comment to the suppliers.

First, the buyer's device 3 transmits the bidding target catalog information which is the bidding target information to the electronic catalog platform 1 through the Internet 9 (step S1 of Fig. 2). When this bidding target catalog information is received, the electronic catalog platform 1 produces the catalog for bidding according to this information (step S3). Then, a notice that the production of the catalog for bidding is completed is transmitted to each supplier's device 7 through the Internet 9 (step S5).

When the catalog for bidding production completion notice is received, each supplier's device 7 makes access to the electronic catalog platform 1 through the Internet 9, and downloads the catalog for bidding from the electronic catalog platform 1 (step S7). Also, the electronic catalog platform 1 notifies this downloading log to the buyer's device 3 (step S9), and the buyer's device 3 receives this downloading log (step S11).

When the catalog for bidding is downloaded, each supplier device 7 produces the bidding catalog corresponding to this catalog for bidding, and this bidding catalog is uploaded from each supplier's device to the electronic catalog platform 1 through the Internet (step S13 of Fig. 2 and Fig. 5).

As shown in Fig. 5, when the bidding catalog 53 is received from each supplier's device 7, the electronic catalog platform 1 reads the supplier narrowing down condition from the supplier narrowing down template 51 (Fig. 5) which is the template for supplier selection (step S101 of Fig. 5), calculates the value of each bidding parameter of the supplier narrowing down template 51 by applying the related value based on the value of each bidding parameter described in the received bidding catalog, more specifically the value containing at least the value of each bidding parameter described in the current bidding catalog from each supplier with respect to the bidding target, and if necessary the values of each bidding parameter described in the previous bidding catalog and the current re-bidding catalog, the past record data, the past log information, the log data for the supplier selection by the buyer, the successful bid catalog data, the sales record data of the buyer, the sales record data of the supplier, etc., as described above, to the calculation formula of the supplier narrowing down template 51, and calculates the total points for each supplier by summing the points corresponding to the range to which this calculated value belongs for all the bidding parameters (step S103).

In this way, it is possible for the point calculation to utilize the past log information besides the current bidding catalog, by calculating the points for each item or each group.

Then, whether this calculated total points for each supplier are greater than or equal to the threshold or not is judged (step S105), and in the case where it is not greater than or equal to the threshold, an unsuccessful bit notice is made to the supplier (step S107), and that supplier receives the unsuccessful bit notice (step S109). In the case where it is greater than or equal to the threshold, this calculated total points for each supplier are stored (step S111). Also, the supplier candidates are selected according to the total points for each supplier, and the bidding catalogs of these selected supplier candidates are integrated and processed (step S15 of Fig. 2), to produce the catalog for comparison, and it is stored into the catalog for comparison database 19, while the completion notice for the catalog for comparison and the notice of the uploading log are made to the buyer's device 3 (step S17).

When the catalog for comparison is received by the communication with the electronic catalog platform 1, the buyer's device 3 carries out the supplier selection (step S19). Namely, the supplier narrowing down search for further narrowing down the supplier candidates according to the content of each bidding parameter such as the price, the delivery time, the inventory, etc., described in this catalog for comparison is carried out (step S21), and this narrowing down key 55 is inputted into the electronic catalog platform 1 (step S121).

When the supplier narrowing down search key is received from the buyer's device 3, the electronic catalog platform 1 reads the supplier narrowing down condition from the supplier narrowing down template 51 (step S123), calculates the value of each bidding parameter by applying the value described in the record data, the previous bidding catalog, the catalog for comparison, etc., to each bidding parameter of the supplier narrowing down template 51, and calculates the supplier narrowing down points for each supplier by summing the points corresponding to the range to which this calculated value belongs for all the bidding parameters (step S125). Then, the narrowing down search result is generated and displayed according to this supplier narrowing down points for each supplier (step S127), and this narrowing down search result is presented to the buyer's device 3 such that it can be read (step S129).

In this way, the point calculation is carries out according to the narrowing down key and the supplier narrowing down template, and the result is displayed in a form of a points descending order display or a points top five display. It is also possible to calculate the points for each item or each group, and utilize the past log information in the point calculation besides the current bidding catalog. It is also possible to select the supplier for each group (maker, category, plant).

The buyer's device 3 selects the re-bidding target suppliers according to the narrowing down search result presented from the electronic catalog platform 1 (step S131), and notifies this re-bidding target supplier selection result to the electronic catalog platform 1, while making a re-bidding request (step S23).

When this re-bidding target supplier selection result and re-bidding request are received (step S133), the electronic catalog platform 1 produces a catalog for re-bidding by integrating and processing the bidding catalogs of this selected re-bidding target suppliers (steps S25, S141).

When the production of the catalog for re-bidding is completed, the electronic catalog platform 1 makes its completion notice along with a re-bidding request and command notice to the supplier's device 7 (steps S27, S143, S145). Note that, in the case where the evaluation points are high for the price, for example, which is one parameter among each bidding parameter of the supplier as a result of evaluating the bidding catalog of each supplier, the comment gives an advise such as the bidding will be unsuccessful unless the price is lowered further, to the supplier.

When the completion notice for the catalog for re-bidding is received along with the re-bidding request and comment notice (steps S29, S147), the supplier's device 7 produces the re-bidding catalog according to this catalog for re-bidding, and uploads that re-bidding catalog to the electronic catalog platform 1 (steps S31, S13).

When the re-bidding catalog is received from the supplier's device 7, the electronic catalog platform 1 produces the catalog for comparison by integrating and processing this re-bidding catalog (step S33), and makes the production completion notice for this catalog for comparison and the notice of the uploading log to the buyer's device 3 (step S35).

The buyer's device 3 receives the catalog for comparison in response to this production completion notice for the catalog for comparison, and repeatedly carries out the processing for further narrowing down the supplier candidates until the successful bidder is determined similarly as described above according to the content of each bidding parameter such as the price, the delivery time, the inventory, etc., described in this catalog for comparison (step S149), and transmits the finally determined supplier selection result to the electronic catalog platform 1 (step S37).

When the supplier selection result from the buyer's device 3 is received, the electronic catalog platform 1 produces the successful bit catalog for this selected supplier and stores it into the successful bit catalog database 27 (step S39), while notifying the successful bit catalog production completion to all the supplier's devices 7 (step S41). The supplier's device 7 makes access to the electronic catalog platform 1 in response to the successful bit catalog production completion notice from the electronic catalog platform 1, and receives and reads the successful bit catalog by downloading it (step S43). Also, the electronic catalog platform 1 notifies this downloading log to the buyer's device 3 (step S45), and the buyer's device 3 receives this downloading log (step S47).

On the other hand, the selected supplier's device 7 produces the spec information and image information according to the successful bit catalog that has been read, and uploads it to the electronic catalog platform 1 (step S49). The electronic catalog platform 1 produces the catalog for purchase system according to the bidding target catalog information in addition to this uploaded spec information and image information (step S51), and notifies its production completion to the buyer's device 3 (step S53). In response to this notice, the buyer's device 3 receives the catalog for purchase system (step S55), and applies this catalog for purchase system to a purchase system 3a of the buyer's device 3 and thereby carries out a purchase of the bidding target.

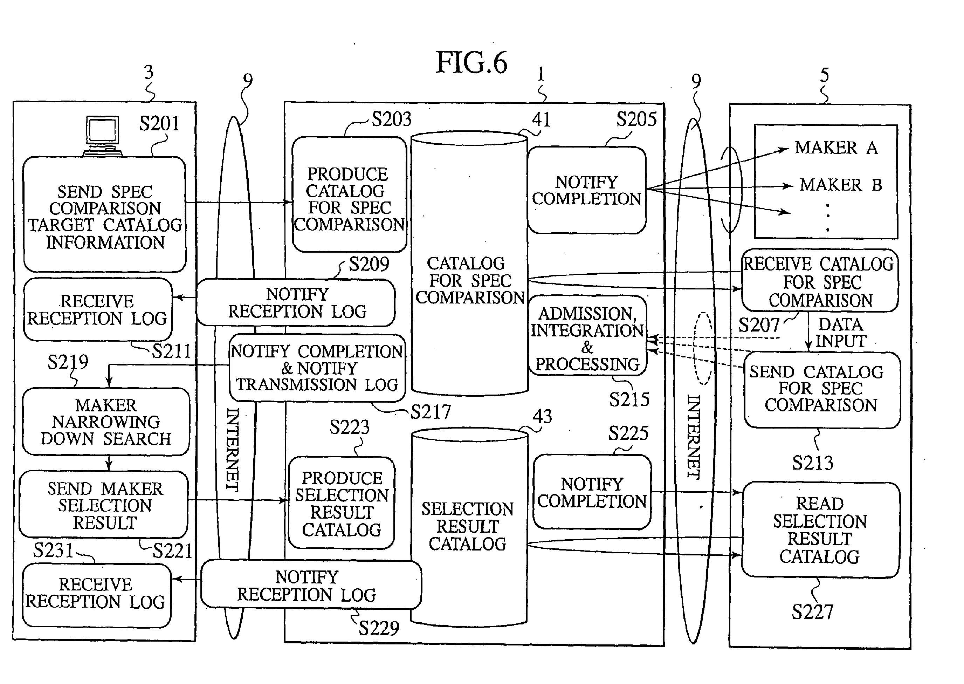

Next, a processing related to the catalog for spec comparison production, the maker selection assistance, and the public announcement of the selection result in the present embodiment will be described in detail, with reference to Fig. 6.

Here, in Fig. 6, the steps S201 to S217 constitute a catalog for spec comparison production service including the production and delivery of the catalog for spec comparison, and the admission, integration and processing of the catalog for spec comparison, and the steps S219 to S231 constitute a maker selection assistance and selection result public announcement service.

In Fig. 6, the buyer's device 3 first uploads a spec comparison target catalog information to the electronic catalog platform 1 (step S201). When the spec comparison target catalog information is received from the buyer's device 3, the electronic catalog platform 1 produces a catalog for spec comparison 41 according to this information (step S203), and makes its production completion notice to each maker's device 5 (step S205).

When the notice is received from the electronic catalog platform 1, each maker's device 5 downloads the catalog for spec comparison from the electronic catalog platform 1 (step S207). When each maker's device 5 carries out the downloading of the catalog for spec comparison, the electronic catalog platform 1 notifies this downloading log to the buyer's device 3 (step S209), and the buyer's device 3 receives that downloading log (step S211).

When the catalog for spec comparison is downloaded, each maker's device 5 inputs data into this catalog for spec comparison, and uploads it to the electronic catalog platform 1 (step S213).

When the catalog for spec comparison with the data inputted is received from each maker's device 5, the electronic catalog platform 1 integrates and processes it to produce the catalog for comparison (step S215), and makes the production completion notice for this catalog for comparison and the notice of the uploading log to the buyer's device 3 (step S217).

When the catalog for comparison is received, the buyer's device 3 carries out the maker narrowing down search according to information such as a color, a size, etc., of the bidding target described in this catalog for comparison (step S219), and transmits this maker selection result to the electronic catalog platform 1 (step S221).

The electronic catalog platform 1 produces a selection result catalog 43 according to the maker selection result from the buyer's device 3 (step S223), and makes its production completion notice to each maker's device 5 (step S225). Each maker downloads and reads this selection result catalog (step S227). Also, the electronic catalog platform 1 notifies that downloading log by the maker to the buyer's device 3 (step S229), and the buyer's device 3 receives this downloading log (step S231).

Note that, in the above described embodiment, various types of information such as the catalog for bidding, the bidding catalog, the catalog for comparison, the catalog for re-bidding, the re-bidding catalog, the successful bit catalog, the catalog for purchase system, etc., has been described as being downloaded or uploaded, but the present invention is not limited to this, and it is also possible to make it such that it is referred on the WWW browser, for example, thereby inputting the above described various types of information.

Note that, the above described embodiment is made such that each buyer and each supplier are registered in advance as members to the present electronic bidding proxy system, and each one carries out the user authentication in cooperation with the electronic catalog platform 1 in an access with respect to the electronic catalog platform 1, thereby increasing the strength of the user authentication.

As described above, according to the present invention, the template for supplier selection in which the calculation formula, the range, the evaluation points, and the threshold for each bidding parameter are set for each bidding target is provided, the total points for each supplier are calculated by applying the related value based on the value of each bidding parameter from each supplier to the calculation formula of this template for supplier selection, and the optimal supplier is selected according to this total points and the threshold, so that it is possible to select the optimal supplier efficiently and quickly by carrying out the narrowing down of suppliers accurately by the template for supplier selection, rather than the supplier selection by the comparison of the prices only or relying on the experience and hunch as in the conventional case, and it is possible to quickly and efficiently carry out the collective bidding of a large amount of items such as a scale of several tens of thousand items, for example, rather than in units of a single item or in units of a small number of items as in the conventional case.

According to the present invention, the template for supplier selection in which the calculation formula, the ranges, the evaluation points, and the threshold for each bidding parameter are set for each bidding target is provided, this template for supplier selection is corrected according to the distribution of each bidding parameter for each supplier, the total points for each supplier are calculated by applying the related value based on the value of each bidding parameter from each supplier to the calculation formula of this template for supplier selection, and the optimal supplier is selected according to this total points and the threshold, so that it is possible to select the optimal supplier efficiently and quickly by carrying out the narrowing down of suppliers accurately by the template for supplier selection, rather than the supplier selection by the comparison of the prices only or relying on the experience and hunch as in the conventional case, and it is possible to quickly and efficiently carry out the collective bidding of a large amount of items such as a scale of several tens of thousand items, for example, rather than in units of a single item or in units of a small number of items as in the conventional case.

Also, according to the present invention, the electronic catalog platform selects the supplier candidates according to the total points for each supplier calculated by applying the related value based on the value of each bidding parameter described in the bidding catalog corresponding to the catalog for bidding produced from the bidding target information to the calculation formula of the template for supplier selection, and the threshold, so that it is possible to carry out the narrowing down of the suppliers logically and accurately by the template for supplier selection, rather than the supplier selection by the comparison of the prices only or relying on the experience and hunch as in the conventional case.

In addition, according to the present invention, the optimal supplier is selected by calculating the total points of each each supplier candidate according to the supplier candidate narrowing down information from the buyer's device and the template, selecting the re-bidding supplier candidates, regarding the re-bidding catalog corresponding to the catalog for re-bidding produced from the bidding catalog of the re-bidding supplier candidate as said bidding catalog and carrying out the above described processing repeatedly, so that it is possible to select the optimal supplier efficiently and quickly by carrying out the narrowing down of the suppliers logically and accurately by the template for supplier selection, rather than the supplier selection by the comparison of the prices only or relying on the experience and hunch as in the conventional case, and it is possible to quickly and efficiently carry out the collective bidding of a large amount of items such as a scale of several tens of thousand items, for example, rather than in units of a single item or in units of a small number of items as in the conventional case. Also, the processings including the catalog production, the collecting of the bidding result, the public announcement of the selection result, etc., are all linked, and carried out automatically on-line through the network, rather than on the paper basis as in the conventional case, so that it is possible to improve each task considerably compared with the conventional case, and it is possible to reduce the huge amount of time and cost.

## Claims

1. An electronic bidding proxy system for assisting to select an optimal supplier according to each bidding catalog information inputted through a network from each supplier's device by a plurality of suppliers who are bidding for a bidding target information inputted through a network from a buyer, the electronic bidding proxy system **characterized by** having
a template for supplier selection in which a calculation formula for calculating a value of each bidding parameter for a bidding target, a plurality of ranges which divide values of each bidding parameter, points for evaluating a value in each range of each bidding parameter, and a threshold which sets a minimum line for a value of each bidding parameter, are set for each bidding target,
a total points calculation means for calculating total points for each supplier by calculating a value of each bidding parameter of the template for supplier selection by applying a related value based on a value of each bidding parameter described in a bidding catalog provided from each supplier with respect to said bidding target to the calculation formula of said template for supplier selection, and summing points corresponding to a range to which this calculated value belongs for all bidding parameters, and
a supplier selection means for selecting a supplier according to this calculated total points for each supplier and said threshold.

2. The electronic bidding proxy system as described in claim 1, **characterized in that** the related value based on a value of each bidding parameter to be applied to the calculation formula of said template for supplier selection contains at least a value of each bidding parameter described in a current bidding catalog from each supplier with respect to said bidding target, and if necessary one or more of values of each bidding parameter described in a previous bidding catalog and a current re-bidding catalog, a past record data, a log data for supplier selection by the buyer, a successful bit catalog data, a sales record data of the buyer, and a sales record data of a supplier, according to need.

3. The electronic bidding proxy system as described in claim 1, **characterized in that** said bidding parameters include at least one or more of a price of the bidding target, a discount rate, and a delivery time.

4. An electronic bidding proxy system for assisting to select an optimal supplier according to each bidding catalog information inputted through a network from each supplier's device by a plurality of suppliers who are bidding for a bidding target information inputted through a network from a buyer, the electronic bidding proxy system **characterized by** having
a template for supplier selection in which a calculation formula for calculating a value of each bidding parameter for a bidding target, a plurality of ranges which divide values of each bidding parameter, points for evaluating a value in each range of each bidding parameter, and a threshold which sets a minimum line for a value of each bidding parameter, are set for each bidding target,
a distribution production means for producing a distribution for each supplier of values of each bidding parameter described in each bidding catalog information provided through a network from a respective supplier's device by each supplier with respect to said bidding target,
a correction means for correcting the ranges, the points, and the threshold of said template for supplier selection according to factors including a deviation value and a spread of this produced distribution of values of each bidding parameter,
a total points calculation means for calculating total points for each supplier by calculating a value of each bidding parameter of the template for supplier selection by applying a related value based on a value of each bidding parameter described in a bidding catalog provided from each supplier with respect to said bidding target to the calculation formula of said template for supplier selection, and summing points corresponding to a range to which this calculated value belongs for all bidding parameters, and
a supplier selection means for selecting a supplier according to this calculated total points for each supplier and said threshold.

5. The electronic bidding proxy system as described in claim 4, **characterized in that** the related value based on a value of each bidding parameter to be applied to the calculation formula of said template for supplier selection contains at least a value of each bidding parameter described in a current bidding catalog from each supplier with respect to said bidding target, and if necessary one or more of values of each bidding parameter described in a previous bidding catalog and a current re-bidding catalog, a past record data, a log data for supplier selection by the buyer, a successful bit catalog data, a sales record data of the buyer, and a sales record data of a supplier, according to need.

6. The electronic bidding proxy system as described in claim 4, **characterized in that** said bidding parameters include at least one or more of a price of the bidding target, a discount rate, and a delivery time.

7. An electronic bidding proxy system for assisting to select an optimal supplier at an electronic catalog platform according to each bidding catalog information inputted through a network from each supplier's device by a plurality of suppliers who are bidding for a bidding target information, by receiving the bidding target information inputted through a network from a buyer's device by a buyer at the electronic catalog platform, the electronic bidding proxy system **characterized in that**
said electronic catalog platform has
a template for supplier selection in which a calculation formula for calculating a value of each bidding parameter for a bidding target, a plurality of ranges which divide values of each bidding parameter, points for evaluating a value in each range of each bidding parameter, and a threshold which sets a minimum line for a value of each bidding parameters, are set for each bidding target or for each bidding target group,
a bidding information reception means for receiving the bidding target information inputted through a network from the buyer's device by the buyer,
a catalog for bidding production means for producing a catalog for bidding according to this received bidding target information,
a catalog for bidding transmission means for transmitting said catalog for bidding through a network to each supplier's device, by communications of the present system and each supplier's device,
a bidding catalog reception means for receiving a bidding catalog corresponding to said catalog for bidding from each supplier's device through a network,
a catalog for comparison production means for calculating total points for each supplier by calculating a value of each bidding parameter of the template for supplier selection by applying a related value based on a value of each bidding parameter described in this received bidding catalog to the calculation formula of said template for supplier selection, and summing points corresponding to a range to which this calculated value belongs for all bidding parameters, selecting supplier candidates according to this calculated total points for each supplier and said threshold, and producing a catalog for comparison by integrating and processing the bidding catalogs of this selected supplier candidates, and
a catalog for comparison transmission means for transmitting said catalog for comparison through a network to the buyer's device, by communications of the present system and said buyer's device.

8. The electronic bidding proxy system as described in claim 7, **characterized in that** the related value based on a value of each bidding parameter to be applied to the calculation formula of said template for supplier selection contains at least a value of each bidding parameter described in a current bidding catalog from each supplier with respect to said bidding target, and if necessary one or more of values of each bidding parameter described in a previous bidding catalog and a current re-bidding catalog, a past record data, a log data for supplier selection by the buyer, a successful bit catalog data, a sales record data of the buyer, and a sales record data of a supplier, according to need.

9. The electronic bidding proxy system as described in claim 7, **characterized in that** said bidding parameters include at least one or more of a price of the bidding target, a discount rate, and a delivery time.

10. An electronic bidding proxy system for assisting to select an optimal supplier at an electronic catalog platform according to each bidding catalog information inputted through a network from each supplier's device by a plurality of suppliers who are bidding for a bidding target information, by receiving the bidding target information inputted through a network from a buyer's device by a buyer at the electronic catalog platform, the electronic bidding proxy system **characterized in that**
said buyer's device has
a re-bidding request means for requesting a re-bidding by receiving said catalog for comparison, and transmitting a narrowing down information for narrowing down said supplier candidates further according to a content of each bidding parameter described in this catalog for comparison, to the electronic catalog platform, and
said electronic catalog platform further has
a catalog for re-bidding production means for receiving said narrowing down information from the buyer's device, calculating total points for each one of said supplier candidates according to this narrowing down information and said template for supplier selection, selecting re-bidding supplier candidates according to this total points of each supplier candidate, and producing a catalog for re-bidding by integrating and processing the bidding catalogs of this selected re-bidding supplier candidates,
a catalog for re-bidding transmission means for transmitting said catalog for re-bidding through a network to a supplier's device of each re-bidding supplier candidate, by communications of the present system and supplier's devices of said re-bidding supplier candidates,
a re-bidding catalog reception means for receiving a re-bidding catalog corresponding to said catalog for re-bidding from a supplier's device of each re-bidding supplier candidate through a network,
an optimal supplier selection means for selecting an optimal supplier for the bidding target of the buyer, by regarding this received re-bidding catalog as said bidding catalog and applying it to processing to be executed by said catalog for comparison production means, the catalog for comparison transmission means, the re-bidding request means, the catalog for re-bidding production means, the catalog for re-bidding transmission means, and the re-bidding catalog reception means, and repeatedly carrying out that processing,
a successful bit catalog production means for producing a successful bit catalog according to the bidding catalog of this selected optimal supplier, and
a catalog for purchase system production means for producing a catalog for purchase system according to a bidding target catalog information, a spec information and an image information.

11. The electronic bidding proxy system as described in claim 10, **characterized in that** the related value based on a value of each bidding parameter to be applied to the calculation formula of said template for supplier selection contains at least a value of each bidding parameter described in a current bidding catalog from each supplier with respect to said bidding target, and if necessary one or more of values of each bidding parameter described in a previous bidding catalog and a current re-bidding catalog, a past record data, a log data for supplier selection by the buyer, a successful bit catalog data, a sales record data of the buyer, and a sales record data of a supplier, according to need.

12. The electronic bidding proxy system as described in claim 10, **characterized in that** said bidding parameters include at least one or more of a price of the bidding target, a discount rate, and a delivery time.

13. An electronic bidding proxy system for assisting to select an optimal maker according to spec catalog. information of a plurality of makers, and assisting to select an optimal supplier according to each bidding catalog information inputted through a network from each supplier's device by a plurality of suppliers who are bidding for a bidding target information inputted through a network from a buyer, the electronic bidding proxy system **characterized by** having
a catalog for spec comparison production means for producing a catalog for spec comparison according to the bidding target information received from the buyer, and transmitting said catalog for spec comparison through a network to each maker's device, by communications of the present system and each maker's device,
an integrated and processed catalog for comparison production means for receiving a data inputted catalog for spec comparison in which data are inputted by each maker with respect to said catalog for spec comparison from each maker through a network, integrating and processing this received data inputted catalog for spec comparison of each maker, and supplying an integrated and processed catalog for comparison to the buyer,
a selection result catalog production means for receiving a result of selecting makers by narrowing down makers according to information described in that catalog for comparison at the buyer according to this integrated and processed catalog for comparison, producing a selection result catalog, and making that selection result catalog readable to each maker,
a catalog for bidding transmission means for a catalog for bidding produced according to said bidding target information to each supplier device which is supplying the bidding target of said selected makers, through a network, by communications of the present system and each supplier's device,
a catalog for comparison production means for selecting supplier candidates according to each bidding parameter described in the bidding catalog received from each supplier's device with respect to said catalog for bidding, and producing a catalog for comparison by integrating and processing the bidding catalogs of this selected supplier candidates,
a catalog for re-bidding production means for transmitting said catalog for comparison through a network to the buyer's device, by communications of the present system and said buyer's device, receiving a re-bidding request transmitted from the buyer's device along with a narrowing down information for narrowing down said supplier. candidates further according to a content of each bidding parameter described in this catalog for comparison, selecting re-bidding supplier candidates from said supplier candidates according to this narrowing down information, and producing a catalog for re-bidding by integrating and processing the bidding catalogs of this selected re-bidding supplier candidates,
a re-bidding catalog reception means for transmitting said catalog for re-bidding through a network to a supplier's device of each re-bidding supplier candidate, by communications of the present system and supplier's devices of said re-bidding supplier candidates, and receiving a re-bidding catalog corresponding to this catalog for re-bidding from a supplier's device of each re-bidding supplier candidate through a network,
an optimal supplier selection means for selecting an optimal supplier for the bidding target of the buyer, by regarding this received re-bidding catalog as said bidding catalog and applying it to processing to be executed by said catalog for comparison production means, the catalog for re-bidding production means, and the re-bidding catalog reception means, and repeatedly carrying out that processing,
a successful bit catalog production means for producing a successful bit catalog according to the bidding catalog of this selected optimal supplier, and
a catalog for purchase system production means for producing a catalog for purchase system according to a bidding target catalog information, a spec information and an image information.

14. The electronic bidding proxy system as described in claim 13, **characterized in that** the related value based on a value of each bidding parameter to be applied to the calculation formula of said template for supplier selection contains at least a value of each bidding parameter described in a current bidding catalog from each supplier with respect to said bidding target, and if necessary one or more of values of each bidding parameter described in a previous bidding catalog and a current re-bidding catalog, a past record data, a log data for supplier selection by the buyer, a successful bit catalog data, a sales record data of the buyer, and a sales record data of a supplier, according to need.

15. The electronic bidding proxy system as described in claim 13, **characterized in that** said bidding parameters include at least one or more of a price of the bidding target, a discount rate, and a delivery time.
